# FASCICULE DE BREVET EUROPEEN

(11) **EP 0 969 347 B1**
(45) Date de publication et mention de la délivrance du brevet: **26.09.2007**
(21) Numéro de dépôt: 99401535.2
(22) Date de dépôt: 21.06.1999
(51) Int. Cl.: G06F 21/20

(54) **Procédé d'authentification pour accès protégés dans un système informatique en réseau**
Authentifizierungsverfahren zum gesicherten Zugriff in einem vernetzten Rechnersystem
Authentication method for protected access in a networked computer system

(30) Priorité: 30.06.1998 FR 9808300
(43) Date de publication de la demande: 05.01.2000
(73) Titulaire: EVIDIAN, 78340 Les Clayes sous Bois (FR)
(72) Inventeur: Caubit, Pierre, 49000 Angers (FR); Sarcher, 49100 Angers (FR)

(56) Documents cités:
- EP-A- 0 413 822
- WO-A-97/07448
- WO-A-98/07085
- US-A- 4 999 806
- US-A- 5 235 642

## Description

### Domaine technique.

L'invention se rapporte à l'authentification requise pour des accès protégés dans un système informatique en réseau. Elle a pour objet un procédé d'authentification d'au moins une entité utilisatrice d'au moins une station à des ressources protégées dans un système informatique en réseau, ainsi qu'au système en résultant.

Elle s'applique à tout système informatique en réseau, qui comprend par définition au moins une station reliée à au moins un serveur par l'intermédiaire d'un réseau. Le terme "station" est utilisé ici dans un sens général pour désigner non seulement une station de travail mais aussi tout ordinateur (ordinateur personnel, mini-ordinateur, ordinateur de très grande puissance ordinairement appelé "mainframe") ou tout appareil tel que celui dit "Web-TV", qui est connecté directement à un téléviseur et n'ayant que des ressources très réduites, tant matérielles que logicielles.

Bien que d'autres serveurs puissent exister dans le système, celui qui intéresse l'invention est un serveur de sécurité. Ce peut être un serveur à part entière ou l'une des fonctions incluses dans un serveur. La fonction de sécurité consiste à gérer l'authentification de diverses entités utilisatrices d'une station du système. Une entité peut être une personne, dite utilisateur, ou une fonction logicielle pouvant demander l'accès au système par l'intermédiaire du réseau.

La fonction logicielle peut par exemple être une application logicielle utilisatrice d'une base de données. L'entité peut aussi être la station elle-même. D'une manière générale, on comprend que pour des accès protégés, il est nécessaire que l'utilisateur et/ou la station soient authentifiés par le serveur de sécurité.

Certaines applications, telles que celles utilisant des bases de données, ou certaines informations liées à ces applications ne sont autorisées qu'à des personnes autorisées, surtout pour des raisons de confidentialité ou pour conserver l'intégrité de ces informations. De même, certains types d'opérations sont aussi soumis à une autorisation. Par exemple, un utilisateur peut lire des données dans une base de données alors que lui sont interdites les opérations d'écriture et/ou d'effacement de données dans la base.

Le réseau peut être quelconque et sera considéré dans l'exemple qui suit comme étant celui connu actuellement sous le nom Internet, ce mot englobant les réseaux dits "Intranet" et "Extranet". De même, le protocole de communication peut être quelconque.

Enfin, les ressources peuvent être quelconques, logicielles et/ou matérielles, telles qu'un logiciel de dessins, une base de données et une ligne téléphonique pour transmettre un fax.

Il est connu par les documents WO 97 07448, US 5 235 642, EP 0 413 822, US 4 999 806 et WO 98 07085 des procédés d'authentification d'au moins une entité utilisatrice d'au moins une station à des ressources protégées d'un système informatique par l'intermédiaire d'un réseau et d'un serveur de sécurité.

### L'art antérieur.

D'une manière générale, une station peut mettre en oeuvre un nombre inférieur ou égal à un nombre n de méthodes d'authentification reconnues par le serveur de sécurité. L'authentification nécessite sur une station des moyens spécifiques d'authentification selon au moins une méthode donnée. Les moyens spécifiques comprennent une partie matérielle nécessaire à l'authentification et une partie logicielle. Une station peut avoir un nombre inférieur ou égal à un nombre p de moyens spécifiques. Une méthode d'authentification est mise en oeuvre par un nombre inférieur ou égal à un nombre q de modules d'authentification reconnus par le serveur de sécurité pour l'exécution de méthodes d'authentification. Il est à noter qu'un module d'authentification peut mettre en oeuvre une ou plusieurs méthodes d'authentification et/ou un ou plusieurs moyens spécifiques. En outre, une méthode peut concerner un nombre au moins égal à 1 de moyens spécifiques, ainsi qu'un nombre au moins égal à 1 de modules d'authentification. D'autres méthodes, d'autres moyens spécifiques et/ou d'autres modules d'authentification peuvent être disponibles sur une ou plusieurs stations. Cependant, le serveur ne les connaît pas et ces méthodes, moyens et/ou méthodes ne peuvent pas servir à l'authentification par le serveur. Lorsqu'une requête d'accès à une ressource protégée est formulée par un utilisateur, un dialogue s'instaure entre la station et le serveur. Les informations échangées dépendent de la méthode utilisée.

Un premier problème important vient du fait qu'il existe déjà un grand nombre de méthodes d'authentification et qu'il va s'y ajouter encore d'autres. Toutes ces méthodes présentent une grande variété de niveaux de sécurité et de degrés de fiabilité. De plus, à cause de l'expansion mondiale des réseaux, de leurs utilisateurs et des bases de données, il existe un nombre de plus en plus grand de conditions d'accès à des ressources protégées. De surcroît, on a vu que les stations susceptibles de coexister sur le réseau sont de natures très diverses, pouvant utiliser des systèmes d'exploitation différents les uns des autres, et sont dotées de ressources logicielles et matérielles très diverses également.

Un exemple d'authentification de bas niveau consiste à demander à l'utilisateur un mot de passe associé à une identification utilisateur. Selon cet exemple, lorsque l'utilisateur émet une requête pour accéder à une application donnée, le serveur retourne en réponse une page dite "Web", par exemple, en langage HTML (HyperText Markup Language). Cette page s'affiche à l'écran de la station. Elle est de type formulaire et se présente sous la forme d'une boîte de dialogue. Dans la boîte se trouvent une zone pour entrer un identifiant de l'utilisateur, par exemple son nom et une autre zone pour entrer un mot de passe. Quand les deux zones de la page sont remplies, un clic sur un bouton de commande disponible dans la boîte envoie la page au serveur. L'envoi avec le protocole HTTP se fait habituellement en mode dit "GET" ou en mode dit "POST". Le mode est programmé dans la page transmise à la station par le serveur. Le serveur comporte une interface appropriée appelée CGI (Common Gateaway Interface) présentant les informations qu'il reçoit de façon préétablie de manière à servir d'entrée normalisée à une application donnée.

Pour que la transaction bénéficie d'un minimum de sécurité, il est encore nécessaire que les données d'identification ne soient pas transmises en clair sur le réseau. Il est donc nécessaire que le navigateur soit du type sécurisé et puisse utiliser une couche logique du réseau, par exemple celle appelée couche de sécurité ou couche SSL (Secure Socket Layer) ou celle plus récente appelée couche TLS (Transport Layer Security).

Le serveur de sécurité dispose d'une base de données de sécurité qui associe l'identifiant au mot de passe. Si la comparaison effectuée sur ce couple de données est positive, l'accès à la ressource demandée est accordé. Dans le cas contraire, elle est refusée. Le serveur de sécurité peut également mémoriser un profil de sécurité associé à un utilisateur donné, le profil ne lui accordant que le droit que d'effectuer certaines opérations (lecture, écriture, etc.).

Par conséquent, dans cet exemple d'authentification à bas niveau, la partie matérielle des moyens spécifiques d'authentification sont constitués par l'écran et le clavier de la station. Dans la station, on comprend qu'il faut un module logiciel permettant de recevoir et de traiter la page émise par le serveur, ainsi que de renvoyer au serveur la page remplie. Le serveur doit donc aussi avoir un module logiciel d'adaptation à cette méthode, coopérant avec la partie logicielle des moyens spécifiques d'authentification.

Un autre exemple d'authentification de plus haut niveau emploie une carte à puce (carte incorporant un circuit intégré). Dans ce cas, les échanges sont comparables à ceux décrits dans le paragraphe précédent. Cependant, la partie matérielle des moyens spécifiques que possède la station doivent comprendre, en plus de l'écran, un lecteur de carte à puce et un logiciel d'interface avec ce lecteur, tel que celui appelé interface API (Application Program Interface) ou interface programmatique d'application. La puce (chip) contenue dans la carte enregistre des données d'identification sous forme chiffrée. L'introduction de la carte peut suffire pour une opération d'authentification, les données d'identification étant lues et transmises. Mais on conçoit que l'on n'identifie alors que la carte et non son porteur. Aussi, il est préférable de combiner cette méthode avec une méthode qui nécessite l'entrée d'un code secret. On comprend donc aussi que le module logiciel doit être différent de celui de l'exemple précédent à bas niveau de sécurité. D'autre part, on comprend aussi que la station doit avoir un module logiciel d'adaptation à cette méthode, qui est différent du module du paragraphe précédent et qui peut même être incompatible avec ce dernier.

Un autre exemple d'authentification dépend aussi de l'environnement sous lequel tourne la station de l'utilisateur. Il en est ainsi par exemple pour le système d'exploitation connu sous le nom de marque déposée "WINDOWS NT". Ce peut aussi être un module ajouté au système d'exploitation.

L'utilisateur doit s'authentifier, même en mode local, c'est-à-dire même en l'absence de toute requête sur le réseau Internet vers le système de traitement de l'information. L'utilisateur est alors déclaré au préalable, et ses droits locaux sont précisés. Lors d'une requête vers le serveur de sécurité, le serveur de sécurité demande à nouveau une authentification. Ceci constitue une perte de temps et mécontente l'utilisateur.

Il existe aussi d'autres méthodes nouvelles d'authentification, et d'autres encore viendront à court terme. Ces méthodes sont généralement plus sophistiquées et présentent une plus grande sécurité d'authentification. On peut citer parmi les techniques émergeantes, l'authentification par techniques biométriques, les certificats selon la norme "X509", etc. Il est donc nécessaires que les procédés d'authentification puissent s'adapter à ces méthodes sans qu'il soit nécessaire de modifier profondément l'existant. Il est enfin nécessaire que, tout en acceptant ces nouvelles techniques, les procédés d'authentification restent compatibles avec les techniques couramment utilisées (compatibilité dite "ascendante").

L'exemple qui suit présente la méthode d'authentification de haut niveau mettant en oeuvre une technique biométrique. La station est alors munie de moyens spécifiques pour acquérir les données biométriques nécessaires, telles que la signature de l'utilisateur, une empreinte digitale et le fond de l'oeil. (mesures de pression, de vitesse, etc. par un transducteur), empreinte digitale, fond de l'oeil, reconnaissance visuelle, etc. Les informations relatives à la signature nécessitent des mesures de pression, de vitesse et d'image et, par conséquent, des moyens spécifiques variés et complexes à disposer à la périphérie de la station. Pour la reconnaissance visuelle, on peut utiliser une caméra vidéo, par exemple du type "WebCam" relié à un port d'entrée-sortie parallèle de la station. Les données acquises sont normalement suffisantes pour qu'il ne soit pas nécessaire de saisir des données supplémentaires d'identification, telles que l'identifiant et un mot de passe. Une interface API spécifique est nécessaire. Là encore, cette méthode spécifique requiert des logiciels de sécurité spécifiques, très différents de ceux décrits précédemment et mêmes incompatibles avec eux.

On a indiqué plus haut une autre méthode émergeante d'authentification de haut niveau, qui consiste à utiliser des certificats d'authentification. Pour ce faire, on peut recourir à la norme "X509". Un tel certificat rassemble diverses données, comprenant habituellement un identifiant, une clé de chiffrage dite publique, une signature chiffrée et d'autres données telles que la date de validité. Le certificat est signé par une autorité dite de "confiance" (autorité "C.A." ou "Certification Authority") qui garantit l'authenticité de la clé publique. La version 3 de la norme "X509" autorise l'insertion de deux catégories de données supplémentaires : des extensions normalisées telles que l'adresse d'un courrier électronique (e-mail); et des extensions dites "propriétaires", à la libre disposition de l'utilisateur et/ou du serveur de sécurité. L'autorité de confiance (C.A.) est, soit intégrée dans le serveur de sécurité, soit indépendante (module spécialisé) et sollicitée par ce serveur de sécurité. La clé privée ou secrète est détenue par le client, c'est-à-dire connue de la station. La transmission du certificat, signé par la clé privée, s'effectue par une couche sécurisée telle que celles connues sous les sigles "SSL" ou "TLS". La clé privée n'est jamais transmise. Elle est destinée à prouver la légitime possession du certificat. Les certificats de sécurité peuvent également être transmis sur le réseau Internet à l'aide de pièces de logiciel appelés "cookies".

On voit encore que cette méthode fait intervenir des moyens spécifiques et des moyens logiciels de sécurité très différents de ceux décrits précédemment.

On mesure ainsi toute la diversité des méthodes, des moyens spécifiques et des logiciels de sécurité correspondants. Naturellement, les présentations des données et/ou informations sur l'écran d'une station diffèrent d'une méthode d'authentification à une autre. En outre, les besoins des différents utilisateurs possibles et leurs connaissances des techniques informatiques sont extrêmement variables. C'est surtout le cas des utilisateurs du réseau Internet, qui n'est pas généralement confiné à un groupe homogène d'individus, même s'il s'agit d'un réseau de type Intranet.

Un second problème de la technique antérieure ressort de l'exemple suivant.

L'exemple se rapporte à l'authentification de l'utilisateur d'une station voulant avoir accès à des ressources protégées d'un système informatique par l'intermédiaire d'un réseau Internet et d'un serveur de sécurité dans le cadre d'une session de type client-serveur.

Les transmissions à travers le réseau Internet s'effectuent selon des protocoles particuliers. L'un des protocoles les plus usités est connu sous la dénomination HTTP (Hypermark Text Transfer Protocol). Ce protocole, et la plupart des protocoles actuellement en usage, ont été élaborés essentiellement pour pouvoir traiter des interrogations simples et sont aisés à utiliser par des personnes non professionnelles de l'informatique. Ce protocole est mis en oeuvre dans la station par un module appelé navigateur ou "browser".

Cependant, le protocole HTTP fonctionne en mode non connecté. L'inconvénient est que le serveur ne peut pas retenir le contexte d'un échange de données à l'autre entre la station et le serveur. Ce protocole est donc peu adapté aux échanges de type transactionnel.

Un troisième problème est dû au fait qu'il existe une grande variété de modules d'authentification. Les plus connus actuellement font appel un module logiciel dit "applet" en langage JAVA ® et celui dit "plug-in", notamment en langage C. Dans le cas notamment du module "plug-in", l'utilisateur doit explicitement le télécharger. L'utilisateur peut donc intervenir pour commander des téléchargements de modules multiples pour les méthodes complexes. Ces téléchargements se font sous des commandes diverses, dépendant notamment du type de la station et de son système d'exploitation.

Un quatrième problème existe, lié à l'évolution rapide des logiciels relatifs aux méthodes d'authentification. Ces logiciels sont donc souvent mis à jour. Par conséquent, l'utilisateur peut être amené à aussi télécharger explicitement leur mise à jour.

### Sommaire de l'invention.

Un premier but de l'invention est d'automatiser l'authentification afin que tout utilisateur n'ait plus à intervenir sur les logiciels de sécurité à mettre en oeuvre. Par exemple, le procédé de l'invention permet à l'utilisateur de n'introduire dans la page formulaire que son identifiant et un mot de passe, ou de n'introduire que sa carte à puce dans le lecteur associé à la station. Dans le cas méthode d'authentification par reconnaissance visuelle par caméra, l'utilisateur n'aurait plus aucune action à faire pour procéder à son authentification. Ce but correspond donc à offrir à tout utilisateur un procédé d'authentification le plus transparent possible.

Un second but de l'invention est d'offrir une grande flexibilité au procédé d'authentification, en intégrant les méthodes actuelles, la mise à jour des logiciels correspondants, ainsi que les méthodes et logiciels à venir, cela de façon transparente pour tout utilisateur.

Un troisième but de l'invention est d'accommoder le procédé d'authentification à tout type de station.

L'invention a pour objet un procédé d'authentification d'au moins une entité utilisatrice d'au moins une station à des ressources protégées d'un système informatique par l'intermédiaire d'un réseau et d'un serveur de sécurité, la station disposant de moyens spécifiques d'authentification selon au moins une méthode donnée et le serveur de sécurité incluant un module logiciel de gestion de sécurité de serveur, caractérisé en ce qu'il consiste au préalable à mettre à la disposition du module de gestion de sécurité un module logiciel de gestion de sécurité de station et un module logiciel d'adaptation de station pour l'adaptation à un nombre maximal de modules d'authentification nécessaires à l'exécution d'un nombre maximal de méthodes d'authentification et, pour procéder à une authentification, il consiste à télécharger sur la station, via le réseau, une copie du module de gestion de sécurité de station, qui vérifie dans la station si une copie valide du module d'adaptation de station est présente dans la station et, sinon, en commande le téléchargement dans la station, et qui commande l'authentification de l'entité selon les moyens spécifiques disponibles sur la station.

L'invention a pour objet corollaire un système informatique comprenant au moins un serveur de sécurité connecté à au moins une station par l'intermédiaire d'un réseau ainsi qu'à des ressources protégées, la station étant utilisable par une entité et disposant de moyens spécifiques d'authentification selon au moins une méthode donnée et le serveur de sécurité incluant un module logiciel de gestion de sécurité, caractérisé en ce que le système met en oeuvre le procédé défini précédemment.

Les caractéristiques et avantages de l'invention ressortent de la description faite en référence aux dessins annexés.

L'invention est définie dans les revendications 1 et 9.

### Présentation des dessins

- la figure 1 illustre sous forme synoptique un exemple de réalisation d'un système informatique mettant en oeuvre un procédé d'authentification conforme à l'invention ; et
- la figure 2 illustre une liste de méthodes mise en oeuvre dans un exemple de procédé d'authentification conforme à l'invention.

### Description détaillée d'exemples illustrant l'invention.

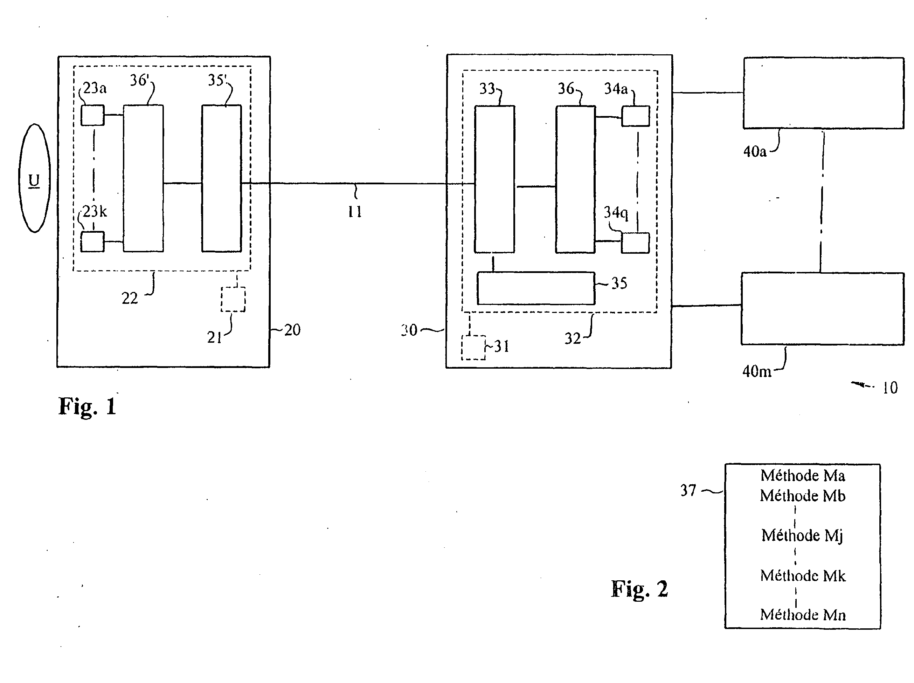

La figure 1 illustre sous forme synoptique un système informatique en réseau 10 conforme à l'invention. Comme le système peut être quelconque, on ne décrira que les éléments impliqués pour la mise en oeuvre du procédé d'authentification conforme à l'invention, les autres éléments étant bien connus de l'homme du métier.

Le système 10 illustré comprend au moins une entité (U) utilisatrice d'au moins une station 20 connectée à au moins un serveur de sécurité 30 par l'intermédiaire d'un réseau 11. Le serveur de sécurité 30 est aussi en liaison avec une pluralité de ressources protégées 40 (40a-40m). Les ressources 40 peuvent être logicielles, telles qu'un logiciel de dessin, et/ou matérielles, telles qu'un standard ou une ligne de communication téléphonique, ou une base de données. Les ressources 40 peuvent se trouver sur un même ensemble serveur incluant le serveur de sécurité 30, ou sur un site éloigné et relié au serveur par un réseau par exemple.

La station 20 inclut au moins un processeur 21 connecté à des moyens dormant mémoire 22. La mémoire 22 sert au stockage de modules logiciels et de données relatifs à l'authentification de l'entité U. La mémoire contient la partie logicielle des moyens spécifiques 23 d'authentification selon au moins une méthode donnée M. Ces moyens spécifiques comprennent ordinairement des parties matérielles respectives nécessaires à l'authentification et des modules logiciels spécifiques à des méthodes d'authentification respectives, les modules étant habituellement faits de bibliothèques de liens dynamiques, appelées bibliothèques DLL (Dynamic Link Library), ou d'interfaces API. Ces modules représentent des fonctions natives, propres à la station et très différentes selon les méthodes d'authentification et l'environnement logiciel, le système d'exploitation notamment. On supposera que la station dispose d'un nombre donné k de moyens spécifiques 23a-23k pour l'authentification d'un nombre correspondant de méthodes d'authentification Ma-Mk représentées dans la liste de la figure 2. D'une manière générale, le nombre k est un entier au moins égal à 1. Dans les dessins, seules les parties logicielles des moyens spécifiques sont concernées par l'invention et sont illustrées sous forme de blocs inclus dans la mémoire 22 de la station. L'entité utilisatrice U sera considérée ici comme étant un utilisateur, bien qu'elle puisse être une entité logicielle, telle qu'une application, ou la station elle-même. L'authentification est traitée par le processeur 21.

Le serveur de sécurité 30 comprend au moins un processeur 31 et des moyens formant mémoire 32. La mémoire 32 sert au stockage de données relatives à l'authentification de l'entité U. Les données logicielles incluent un module de gestion de sécurité de serveur 33. Le module de gestion 33 peut être du type CGI précité et a pour fonction principale de gérer la sécurité et les échanges relatifs à la sécurité entre le serveur et les stations. D'autre part, le serveur 30 est censé reconnaître un nombre maximal n de méthodes d'authentification Ma-Mn (voir figure 2) pouvant être mises en oeuvre par un nombre maximal p de moyens spécifiques 23a-23p et un nombre maximal q de modules d'authentification 34a-34q. Le nombre k de moyens spécifiques disponibles sur une station quelconque du système et pouvant être reconnus par le serveur est donc inférieur ou égal au nombre p. Cependant, il est possible que les stations 20 du système 10 aient des moyens spécifiques autres que ceux répertoriés dans le serveur 30. Dans ce cas, ces autres moyens spécifiques ne seraient pas utilisables par le serveur 30. D'une manière générale, un serveur de sécurité du système 10 peut ne pas inclure de modules d'authentification.

Cependant, le serveur 30 illustré contient les modules 34a-34q pour l'exécution du nombre n de méthodes d'authentification Ma-Mn représentées dans la liste de la figure 2. Les modules 34a-34q sont couplés au module de gestion 33 conformément à la technique antérieure.

Dans la mémoire 32 du serveur 30, le module de gestion de sécurité 33 est en liaison avec un module logiciel de gestion de sécurité de station 35 et un module logiciel 36 d'adaptation de station au nombre q des modules d'authentification 34. Le module d'adaptation de station 36 illustré est donc en liaison avec le nombre q de modules d'authentification 34. Les fonctions de ces deux modules ressortiront de la description du procédé d'authentification qui va maintenant être faite.

Pour procéder à une authentification, le procédé de l'invention consiste à télécharger sur la station 20, via le réseau 11, une copie 35' du module de gestion de sécurité de station 35. Le module de gestion de sécurité de station téléchargé 35' dans la station vérifie alors si la station possède une copie valide 36' du module d'adaptation de station 36 présent dans le serveur. Sinon, le module de gestion de station 35' commande le téléchargement d'une copie du module d'adaptation de station 36 contenu dans le serveur. Si le précédé est utilisé pour la première fois sur la station par exemple, la station n'incorpore pas un module d'adaptation de station 36'. Le module de gestion de station 35' commande donc le téléchargement d'une copie 36' nécessairement mise à jour du module d'adaptation de station 36 présent dans le serveur. Si la station 20 a déjà utilisé le procédé, le module d'adaptation de station 36' a déjà été téléchargé et peut encore subsister dans la station. Cependant, il peut ne plus être valide, notamment si la version de mise à jour ne correspond pas avec celle du module d'adaptation 36 mis à la disposition du serveur. Dans ce cas, le module de gestion de station 35' pilote le téléchargement d'une copie valide 36' du module d'adaptation de station. Le module de gestion téléchargé 35' peut être par exemple un "applet Java ® ou une pièce logicielle en langage C, transmis en même temps qu'une page "Web" en langage HTML.

Le module de gestion téléchargé 35' commande alors l'authentification selon les moyens spécifiques disponibles sur la station. Il existe de nombreuses façons possibles. Selon l'exemple choisi, le module de gestion préchargé 35' commande la sélection d'au moins une méthode Mj parmi les méthodes disponibles sur la station et la soumission à l'entité utilisatrice U et/ou aux moyens spécifiques d'authentification 23j (non illustrés) de la station qui sont concernés par la méthode sélectionnée. La commande de la sélection et de la soumission de la méthode Mj peut être faite directement par le module de gestion téléchargé 35' ou, comme dans l'exemple illustré, par l'intermédiaire du module d'adaptation de station 36', ou aussi par l'intermédiaire de tout autre moyen. Cependant, la soumission pourrait être commandée directement par le module d'adaptation 36'. La soumission peut impliquer l'utilisateur U, par exemple si la méthode se rapporte à une authentification par identifiant et mot de passe. Mais elle peut ne pas impliquer l'utilisateur U, par exemple lorsque la méthode consiste simplement à utiliser une caméra minuscule comme moyen spécifique 23j pour photographier l'utilisateur en vue d'une authentification par reconnaissance visuelle. Elle peut aussi impliquer à la fois l'utilisateur et les moyens spécifiques, par exemple pour une authentification par carte à puce ou par empreinte digitale.

De préférence, la sélection est faite en fonction de leur degré de sécurité. Par exemple, la méthode Mj sélectionnée par le module de gestion téléchargé 35' présente le degré de sécurité le plus élevé parmi les méthodes Ma-Mk disponibles sur la station. Cette sélection est préférable car la méthode Mj est censée pouvoir offrir à l'utilisateur U l'accès au plus grand nombre de ressources protégées qu'il peut avoir. Bien sûr, il serait possible de laisser le choix à l'utilisateur. Mais s'il choisit une méthode Mb de plus faible degré de sécurité, il peut ne pas avoir accès aux ressources qu'il souhaite et doit alors recommencer la procédure d'authentification.

La sélection de la méthode Mj de plus haut degré de sécurité peut consister, selon une première étape, à télécharger dans la mémoire 22 de la station 20, de préférence avec le téléchargement du module de gestion 35 et/ou du module d'adaptation 36, une liste 37 de toutes les méthodes disponibles dans le serveur de sécurité et ordonnées selon leur degré de sécurité. Une telle liste est illustrée dans la figure 2. La seconde étape consiste à sélectionner parmi ces méthodes celle(s) disponible(s) sur la station. Cette sélection peut donc être faite dès le téléchargement du module de gestion 35. Dans ce cas, la liste 37 pourrait être un module indépendant des autres modules, ou faire partie de ce module. Selon l'exemple choisi, la liste 37 est un composant du module d'adaptation 36.

De préférence aussi, la méthode sélectionnée Mj est soumise à l'utilisateur U et/ou aux moyens spécifiques correspondants 23j dans l'ordre décroissant de leur degré de sécurité. Ainsi, l'utilisateur a dès le départ la meilleure authentification, mais il peut disposer de toute autre méthode disponible sur la station. Le choix peut se faire à l'aide d'une boîte de dialogue incorporant une liste indiquant la hiérarchie des méthodes Ma-Mk disponibles sur la station et permettant à l'utilisateur de faire un choix, par exemple avec l'aide d'un bouton de commande par clic.

La liste de méthodes d'authentification 37 n'est pas, dans le cas général, une liste fixe, c'est-à-dire déterminée une fois pour toutes. Elle peut dépendre avantageusement du type et/ou de la nature de la ressource devant être accédée. On conçoit aisément que l'accès à une base de données non confidentielles ne nécessite pas de méthode d'authentification de niveau élevé. Dans ce cas, la liste peut se résumer à une seule méthode de bas niveau (mot de passe et identifiant, par exemple), ou du moins la méthode d'authentification référencée Mn sera une méthode de ce niveau.

Le procédé peut aussi offrir une aide à l'utilisateur dans le cas particulier où la station active un système d'exploitation nécessitant une authentification initiale de l'entité par la station. Ce cas a été présenté dans l'introduction relative à l'art antérieur. Le procédé consiste à envoyer, sous la commande du module de gestion téléchargé 35', cette authentification préalable au serveur de sécurité. Ceci peut se faire par exemple par l'envoi d'un certificat d'authentification au serveur, ou à l'aide d'une interface API particulière. Si l'authentification initiale est reconnue par le serveur, c'est-à-dire si elle faite selon l'une des méthodes Ma-Mn répertoriées dans le serveur, le serveur l'accepte et donne à l'utilisateur les droits d'accès correspondants. Ainsi, l'utilisateur U n'a pas besoin de refaire la procédure d'authentification, comme c'était le cas de l'art antérieur. Si le serveur n'accepte pas l'authentification initiale, il procède à une authentification conforme à l'invention, telle que décrite précédemment. Cette procédure est entièrement transparente pour l'utilisateur. On peut d'ailleurs parler dans ce cas d'une procédure du type connu ordinairement sous la terminologie anglo-saxonne "Single Sign On".

Par ailleurs, compte tenu de la facilité de mise en oeuvre de l'invention, le procédé de l'invention peut prévoir des authentifications à intervalles réguliers, selon des règles de sécurité préétablies et enregistrées dans une base de données de sécurité consultable par le module de gestion de sécurité 35 du serveur.

Dans le cadre du réseau Internet pris comme exemple, les informations échangées entre les modules de gestion 35 et 35' sont faites d'une suite de couples "mot clé/valeur", conforme à la codification de type "QueryString HTTP" utilisée pour les transmissions de type Internet.

Cependant, les mots clés et les conventions de valeurs sont spécifiques à l'invention. De même, l'acheminement des données effectué dans l'exemple illustré est fait selon un protocole de communication normalisé, par exemple "HTTP". D'autres protocoles peuvent être utilisés, notamment le protocole en cours de développement "llOP" (pour "Internet Interchange Object Protocol") qui permettra des transactions en mode dit connecté.

D'autre part, le serveur 10 pourrait inclure un module logiciel d'adaptation de serveur aux modules d'authentification 34a-34q. Ce module logiciel serait utile si le serveur 30 ou le module de gestion de serveur 33 ne peut pas assurer seul la vérification des données reçues de la station 20 et doit avoir recours à tout ou partie des modules d'authentification.

En outre, on a vu précédemment que les modules d'authentification (34a-34q) peuvent ne pas être inclus dans le serveur de sécurité (30). Cependant, ils pourraient aussi être contenus au moins en partie dans le serveur de sécurité.

Le procédé de l'invention offre donc une grande flexibilité d'utilisation et s'avère transparent pour l'utilisateur. Il s'accommode tout à la fois d'une multiplicité de méthodes d'authentification actuellement connues et des méthodes à venir, et d'une multiplicité de stations.

Le procédé d'authentification présente donc de nombreux intérêts et notamment les suivants : maîtrise de la multiplicité des configurations de stations, simplicité pour l'utilisateur final, transparence des opérations : il devra seulement entrer un mot de passe et éventuellement un identifiant pour certaines méthodes, automaticité des téléchargements, compatibilité possible avec toutes les techniques existantes et les techniques à venir, sans la nécessité de modifications importantes, ni de télécharger une pluralité de modules différents.

## Revendications

1. Procédé d'authentification d'au moins une entité (U) utilisatrice d'au moins une station (20) à des ressources protégées (40) d'un système informatique (10) par l'intermédiaire d'un réseau (11) et d'un serveur de sécurité (30), la station (20) disposant de moyens spécifiques (23a-23k) d'authentification selon au moins une méthode donnée (Ma-Mk) et le serveur de sécurité (30) incluant un module logiciel de gestion de sécurité de serveur (33), **caractérisé en ce qu'**il comprend au préalable une étape de mise à la disposition du module de gestion de sécurité (33) d'un module logiciel de gestion de sécurité de station (35) et d'un module logiciel d'adaptation de station (36) pour l'adaptation à un nombre maximal de modules d'authentification (34a-34q) nécessaires à l'exécution d'un nombre maximal de méthodes d'authentification (Ma-Mn), chacun des modules logiciels (35, 36) mis à la disposition du module de gestion de sécurité (33) pouvant être téléchargé sous la forme d'une copie (35', 36') vers la station (20), le procédé comportant en outre, pour réaliser une étape d'authentification :
- une étape de téléchargement sur la station (20), via le réseau (11), d'une copie (35') du module de gestion de sécurité de station (35) ;
- une étape de vérification dans la station (20) par ladite copie (35') qu'une copie valide (36') du module d'adaptation de station (36) est présente ;
- en cas d'absence dans la station (20) d'une copie valide (36') du module d'adaptation de station (36), constatée lors de l'étape de vérification, une étape de commande, réalisée par la copie (35') du module de gestion de sécurité de station (35), pour commander le téléchargement dans la station (20) d'une copie (36') du module d'adaptation de station (36) présent dans le serveur (30) ; et
- une étape de commande, réalisée par la copie (35') du module de gestion de sécurité de station (35), de l'authentification de l'entité (U) selon les moyens spécifiques (23a-23k) disponibles sur la station (20).

2. Procédé selon la revendication 1, **caractérisé en ce que** le module de gestion téléchargé (35') commande la sélection d'au moins une méthode parmi les méthodes disponibles sur la station (20).

3. Procédé selon la revendication 2, **caractérisé en ce que** la sélection est faite en fonction de leur degré de sécurité.

4. Procédé selon la revendication 2 ou 3, **caractérisé en ce que** la sélection consiste à télécharger dans la station (20), via le réseau (11), une liste (37) de toutes les méthodes disponibles dans le serveur de sécurité (30) et ordonnées selon leur degré de sécurité et à sélectionner parmi ces méthodes celle(s) disponible(s) sur la station (20).

5. Procédé selon la revendication 4, **caractérisé en ce que** la liste (37) est automatiquement téléchargée avec le module de gestion (35) et/ou avec le module d'adaptation (36).

6. Procédé selon l'une des revendications 1 à 5, comprenant une soumission à l'entité (U) utilisatrice et/ou aux moyens spécifiques (23a-23k) d'authentification d'une méthode donnée parmi les méthodes (Ma-Mk) disponibles sur la station (20), ladite soumission étant faite par le module d'adaptation (36') présent dans la station (20) sous la commande du module de gestion téléchargé (35').

7. Procédé selon l'une des revendications 1 à 6, **caractérisé en ce que** lorsque la station (20) active un système d'exploitation nécessitant une authentification initiale de l'entité par la station (20), le procédé consiste à envoyer, sous la commande du module de gestion téléchargé (35'), cette authentification initiale au serveur de sécurité (30).

8. Procédé selon l'une des revendications 1 à 7, **caractérisé en ce que** les modules d'authentification (34a-34q) sont contenus au moins en partie dans le serveur de sécurité (30).

9. Système informatique (10) comprenant au moins un serveur de sécurité (30) connecté à au moins une station (20) par l'intermédiaire d'un réseau (11) ainsi qu'à des ressources protégées (40a-40m), la station (20) étant utilisable par une entité (U) et disposant de moyens spécifiques (22a-22k) d'authentification selon au moins une méthode donnée (Ma-Mk) et le serveur de sécurité (30) incluant un module logiciel de gestion de sécurité (33), **caractérisé en ce que** le système met en oeuvre le procédé défini par l'une des revendications précédentes.

## Claims

1. Method for authentication of at least one unit (U) using at least one station (20) with protected resources (40) of an information processing system (10) via a network (11) and a security server (30), the station (20) having specific means (23a-23k) for authentication according to at least one given method (Ma-Mk) and the security server (30) including a server security management software module (33), **characterised in that** it comprises a preliminary step of making available the security management module (33) of a station security management software module (35) and a station adaptation software module (36) for adaptation to a maximum number of authentication modules (34a-34q) necessary for the execution of a maximum number of authentication methods (Ma-mn), it being possible for each of the software modules (35, 36) made available to the security management module (33) to be downloaded in the form of a copy (35', 36') to the station (20), the method also comprising, in order to carry out an authentication step:
- a step of downloading to the station (20), via the network (11), of a copy (35') of the station security management module (35);
- a step of verification in the station (20) by said copy (35') that a valid copy (36') of the station adaptation module (36) is present;
- in the case of the absence in the station (20) of a valid copy (36') of the station adaptation module (36), noted at the time of the verification step, a command step carried out by the copy (35') of the station security management module (35) to command the downloading to the station (20) of a copy (36') of the station adaptation module (36) that is present in the server (30); and
- a command step, carried out by the copy (35') of the station security management module (35) to command the authentication of the unit (U) according to the specific means (23a-23k) available in the station.

2. Method according to Claim 1, **characterised in that** the downloaded management module (35') commands the selection of at least one method from among the methods available in the station (20).

3. Method according to Claim 2, **characterised in that** the selection is made according to their degree of security.

4. Method according to Claim 2 or 3, **characterised in that** the selection consists in downloading to the station (20), via the network (11), a list (37) of all the methods available in the security server (30) and ordered according to their degree of security and in selecting from among these methods the one(s) available in the station (20).

5. Method according to Claim 4, **characterised in that** the list (37) is automatically downloaded with the management module (35) and/or with the adaptation module (36).

6. Method according to one of Claims 1 to 5, comprising a submission to the user unit (U) and/or the specific means (23a-23k) for authentication of a given method among the methods (Ma-Mk) available on the station, said submission being made by the adaptation module (36') present in the station (20) under the control of the downloaded management module (35').

7. Method according to one of Claims 1 to 6, **characterised in that** when the station (20) activates an operating system requiring an initial authentication of the unit by the station (20), the method consists in sending this initial authentication to the security server, under the control of the downloaded management module (35').

8. Method according to one of Claims 1 to 7, **characterised in that** the authentication modules (34a-34q) are contained at least partly in the security server.

9. Information processing system (10) comprising at least one security server (30) connected to at least one station (20) via a network (11) together with protected resources (40a-40m), the station (20) being usable by a unit (U) and having specific authentication means (22a-22k) according to at least one given method (Ma-Mk) and the security server (30) including a security management software module (33), **characterised in that** the system implements the method defined by one of the preceding claims.

## Patentansprüche

1. Verfahren zum Authentifizieren wenigstens einer Anwenderentität (U) wenigstens einer Station (20) mit geschützten Betriebsmitteln (40) eines Datenverarbeitungssystems (10) über ein Netz (11) und einen Sicherheitsserver (30), wobei die Station (20) spezifische Mittel (23a-23k) zur Identifizierung in Übereinstimmung mit wenigstens einem gegebenen Verfahren (Ma-Mk) einrichtet und der Sicherheitsserver (30) ein Serversicherheitsmanagement-Softwaremodul (33) enthält, **dadurch gekennzeichnet, dass** es im Voraus einen Schritt umfasst, bei dem dem Sicherheitsmanagement-Modul (33) ein Stationssicherheitsmanagement-Softwaremodul (35) und ein Stationsanpassungs-Logikmodul (36) für die Anpassung an eine maximale Anzahl von Authentifizierungsmodulen (34a-34k), die für die Ausführung einer maximalen Anzahl von Authentifizierungsverfahren (Ma-Mn) notwendig sind, zur Verfügung gestellt werden, wobei jedes der Softwaremodule (35, 36), die für das Sicherheitsmanagement-Modul (33) zur Verfügung gestellt werden, in Form einer Kopie (35', 36') in die Station (20) ferngeladen werden kann, wobei das Verfahren außerdem für die Ausführung eines Authentifizierungsschrittes umfasst:
einen Schritt des Fernladens einer Kopie (35') des Stationssicherheitsmanagement-Moduls (35) über das Netz (11) in die Station;
einen Schritt des Verifizierens, dass eine gültige Kopie (36') des Stationsanpassungsmoduls (36) in der Station (20) vorhanden ist, durch die Kopie (35');
wenn eine gültige Kopie (36') des Stationsanpassungsmoduls (36) in der Station (20) fehlt, was im Verifikationsschritt festgestellt wird, einen Steuerschritt, der durch die Kopie (35') des Stationssicherheitsmanagement-Moduls (35) ausgeführt wird, um das Fernladen einer Kopie (36') des in dem Server (30) vorhandenen Stationsanpassungsmoduls (36) in die Station (20) zu steuern; und
einen Schritt, der durch die Kopie (35') des Stationssicherheitsmanagement-Moduls (35) ausgeführt wird, zum Steuern der Authentifizierung der Entität (U) in Übereinstimmung mit spezifischen Mitteln (23a-23k), die in der Station (20) verfügbar sind.

2. Verfahren nach Anspruch 1, **dadurch gekennzeichnet, dass** das Fernlademanagement-Modul (35') die Auswahl wenigstens eines Verfahrens unter den in der Station (20) verfügbaren Verfahren steuert.

3. Verfahren nach Anspruch 2, **dadurch gekennzeichnet, dass** die Auswahl in Abhängigkeit von ihrem Sicherheitsgrad erfolgt.

4. Verfahren nach Anspruch 2 oder 3, **dadurch gekennzeichnet, dass** die Auswahl darin besteht, eine Liste (37) aller in dem Sicherheitsserver (30) verfügbaren Verfahren, die gemäß ihrem Sicherheitsgrad geordnet sind, über das Netz (11) in die Station (20) fernzuladen und unter diesen Verfahren jene(s), die(das) in der Station (20) verfügbar sind(ist), auszuwählen.

5. Verfahren nach Anspruch 4, **dadurch gekennzeichnet, dass** die Liste (37) mit dem Management-Modul (35) und/oder mit dem Anpassungsmodul (36) automatisch ferngeladen wird.

6. Verfahren nach einem der Ansprüche 1 bis 5, das das Unterwerfen eines gegebenen Verfahrens der in der Station (20) verfügbaren Verfahren (Ma-Mk) unter die Anwenderentität (U) und/oder unter die spezifischen Authentifizierungsmittel (23a-23k) umfasst, wobei die Unterwerfung durch das in der Station (20) vorhandene Anpassungsmodul (36') unter der Steuerung des Fernlademanagement-Moduls (35') erfolgt.

7. Verfahren nach einem der Ansprüche 1 bis 6, **dadurch gekennzeichnet, dass** es dann, wenn die Station (20) ein Betriebssystem aktiviert, das eine anfängliche Authentifizierung der Entität durch die Station (20) erfordert, darin besteht, unter der Steuerung des Fernlademanagement-Moduls (35') diese anfängliche Authentifizierung zum Sicherheitsserver (30) zu schicken.

8. Verfahren nach einem der Ansprüche 1 bis 7, **dadurch gekennzeichnet, dass** die Authentifizierungsmodule (34a-34q) wenigstens teilweise in dem Sicherheitsserver (30) enthalten sind.

9. Datenverarbeitungssystem (10), das wenigstens einen Sicherheitsserver (30) umfasst, der mit wenigstens einer Station (20) über ein Netz (11) sowie mit geschützten Betriebsmitteln (40a-40m) verbunden ist, wobei die Station (20) durch eine Entität (U) verwendet werden kann und spezifische Authentifizierungsmittel (22a-22k) gemäß wenigstens einem gegebenen Verfahren (Ma-Mk) einrichtet und der Sicherheitsserver ein Softwaremodul (33) für das Sicherheitsmanagement enthält, **dadurch gekennzeichnet, dass** das System das durch einen der vorhergehenden Ansprüche definierte Verfahren ausführt.
